# EUROPÄISCHE PATENTSCHRIFT

(11) **EP 3 210 227 B1**
(45) Veröffentlichungstag und Bekanntmachung des Hinweises auf die Patenterteilung: **25.03.2020**
(21) Anmeldenummer: 15791265.0
(22) Anmeldetag: 29.10.2015
(51) Int. Cl.: H01H 19/02, H01H 9/18, F21V 8/00

(54) **DREHBETÄTIGER MIT EINER HOMOGEN AUSGELEUCHTETEN ANZEIGEFLÄCHE**
ROTARY ACTUATOR WITH A HOMOGENEOUSLY ILLUMINATED DISPLAY SURFACE
ACTIONNEUR ROTATIF AVEC UNE SURFACE D'AFFICHAGE ÉCLAIRÉE DE FAÇON HOMOGÈN

(30) Priorität: 19.12.2014 DE 102014226621
(43) Veröffentlichungstag der Anmeldung: 30.08.2017
(73) Patentinhaber: Siemens Aktiengesellschaft, 80333 München (DE)
(72) Erfinder: FAURIE, Jean Jacques, 90409 Nürnberg (DE)
(86) Internationale Anmeldenummer: PCT/EP2015/075140
(87) Internationale Veröffentlichungsnummer: WO 2016/096225

(56) Entgegenhaltungen:
- EP-A2- 1 653 489
- JP-A- 2012 084 242
- JP-A- 2012 150 932
- US-A1- 2006 102 456
- US-A1- 2012 314 397
- US-A1- 2014 211 503

## Beschreibung

Die Erfindung betrifft einen Drehbetätiger mit einem zylindrischen Grundkörper und einer Betätigungshandhabe, die auf den zylindrischen Grundkörper aufgesetzt ist und eine beleuchtbare Anzeigefläche aufweist.

Derartige Drehbetätiger werden zur Befehlseingabe an so genannten Maschinen/Mensch-Schnittstellen regelmäßig verwendet. Dabei ist nicht nur eine Verwendung zur Schaltung von Steuerströmen, sondern auch für Leistungsschaltungen denkbar, indem der Drehbetätiger als Auslöser für Leistungsschalter eingesetzt wird. An diese Drehbetätiger werden hohe Anforderungen bezüglich Lebensdauer, Robustheit, Abdichtung des elektrischen Teiles gegen Wasser und Schmutz gestellt. Außerdem soll die Herstellbarkeit möglichst kostengünstig und prozesssicher sein.

Diese Befehlsgeräte werden in Schalttafeln, Bedientableaus, Schaltschranktüren oder Gehäusedeckel montiert. Befehlsgeräte sind in der Regel modular aufgebaut. Das bedeutet, sie bestehen aus einem Betätiger, einem Befestigungsteil, wie zum Beispiel einer Ringmutter oder einem Montagehalter und einem oder mehreren Schaltelementen, die als Öffner- oder Schließerschaltglieder ausgeführt sind. Zur Montage wird der Betätiger in der Regel von vorn durch ein Loch in der Schalttafel geführt und von hinten mittels eines Befestigungsteils montiert. Die Schaltelemente werden mit Schrauben, Schnapphaken oder Riegeln mechanisch am Betätiger oder am Befestigungsteil befestigt. Die elektrische Verbindung der Schaltelemente mit der Steuerung erfolgt über Anschlussklemmen.

Drehbetätiger können durch Drehen verschiedene Schaltpositionen einnehmen, um beispielsweise einen Motor ein- oder auszuschalten. Im Fall eines beleuchteten Drehbetätigers kennzeichnet die Beleuchtung die jeweilige Schaltstellung. Diese muss von allen Betrachtungswinkeln aus gut zu erkennen sein.

Die EP 1 653 489 A1, US 2012/0314397 A1 und JP 2012 150932 A offenbaren einen Drehbetätiger mit einem zylindrischen Grundkörper und einer Betätigungshandhabe, die auf den zylindrischen Grundkörper aufgesetzt ist und eine beleuchtbare Anzeigefläche aufweist, wobei im zylindrischen Grundkörper eine Lichtquelle angeordnet ist, deren Licht über eine erste Reflexionsfläche auf einen ersten Abschnitt der beleuchtbaren Anzeigefläche reflektiert wird.

Demgemäß besteht die Aufgabe der vorliegenden Erfindung darin, einen Drehbetätiger zu schaffen, der eine möglichst homogene Ausleuchtung der beleuchtbaren Anzeigefläche ermöglicht.

Diese Aufgabe wird durch einen Drehbetätiger mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch einen Drehbetätiger gelöst mit einem zylindrischen Grundkörper und einer Betätigungshandhabe, die auf den zylindrischen Grundkörper aufgesetzt ist und eine beleuchtbare Anzeigefläche aufweist. Die Erfindung zeichnet sich dabei dadurch aus, dass im zylindrischen Grundkörper eine Lichtquelle angeordnet ist, deren Licht über eine erste Reflexionsfläche auf einen ersten Abschnitt der beleuchtbaren Anzeigefläche reflektiert wird.

Der Kern der Erfindung besteht darin, den Lichtkanal innerhalb des Drehbetätigers so zu gestalten, dass eine homogene Ausleuchtung der Anzeigefläche in der Betätigungshandhabe gewährleistet ist. Dazu wurde ein Lichtleiterführungskanal entwickelt, der vorzugsweise einstückig ausgebildet ist und zunächst das Licht einer Lichtquelle, vorzugsweise einer LED, durch einen vorzugsweise zylindrisch ausgeformten Lichtleiter führt. Durch Einbringen von Reflexionsflächen in den Lichtkanal können dann die Lichtstrahlen auf die beleuchtbare Anzeigefläche reflektiert werden. Da die Anzeigefläche über eine Kante auf der Oberseite und an der Seitenfläche der Betätigungshandhabe ausgebildet ist, ist es von Vorteil, wenn unterschiedliche Reflexionsflächen unterschiedliche Teilbereiche der beleuchtbaren Anzeigefläche ausleuchten, so dass insgesamt eine homogene Ausleuchtung entsteht.

Es ist vorgesehen, dass das Licht der Lichtquelle über eine zweite Reflexionsfläche auf einen zweiten Abschnitt der beleuchtbaren Anzeigefläche reflektiert wird. Die unterschiedlichen Reflexionsflächen reflektieren den Lichtstrahl auf unterschiedliche Teilbereiche der beleuchtberen Anzeigefläche, so dass insgesamt eine homogen ausgeleuchtete Anzeigefläche entsteht, die von allen Betrachtungswinkeln aus gut zu erkennen ist.

In einer speziellen Ausgestaltung der Erfindung kann ein weiteres Konzept darin bestehen, dass das Licht der Lichtquelle über einen Lichtleiter zur beleuchtbaren Anzeigefläche zu führen ist. Der Lichtleiter erstreckt sich von der Lichtquelle bis zur Betätigungshandhabe und gewährleistet so, dass der Lichtstrahl ungehindert zur Anzeigefläche gelangt.

In einer speziellen Ausgestaltung der Erfindung kann ein weiteres Konzept darin bestehen, dass der Lichtleiter, die erste und zweite Reflexionsfläche und die beleuchtbare Anzeigefläche in einem Lichtleiterführungsbauteil ausgebildet sind. Durch die Verwendung eines funktionsoptimierten Bauteils für die Lichtführung kann die Herstellung des Drehbetätigers erheblich vereinfacht werden.

In einer besonders vorteilhaften Ausgestaltung der Erfindung kann es vorgesehen sein, dass das Lichtleiterführungsbauteil als transparentes Kunststoffteil ausgebildet ist. Die Verwendung von Kunststoff ermöglicht eine einfache und kostengünstige Herstellung.

In einer Fortführung dieses erfindungsgemäßen Konzepts kann es vorgesehen sein, dass das Lichtleiterführungsbauteil von unten in eine Betätigungshandgabe des Drehbetätigers einzuführen ist. Die Einteiligkeit des Lichtleiterführungsbauteils vereinfacht dabei die Fixierung an der Betätigungshandhabe.

In einer speziellen Ausgestaltung der Erfindung kann ein weiteres Konzept darin bestehen, dass die erste Reflexionsfläche als ovale Ausnehmung ausgebildet ist. Die Ausbildung einer Ausnehmung im Lichtleiterführungskanal ist technisch sehr einfach umzusetzen und ermöglicht somit eine kostengünstige Herstellung.

In einer speziellen Ausgestaltung der Erfindung kann ein weiteres Konzept darin bestehen, dass die zweite Reflexionsfläche als ovale Ausnehmung ausgebildet ist. Die Ausbildung einer Ausnehmung im Lichtleiterführungskanal ist technisch sehr einfach umzusetzen und ermöglicht somit eine kostengünstige Herstellung.

In einer besonders vorteilhaften Ausgestaltung der Erfindung kann es vorgesehen sein, dass die erste Reflexionsfläche, von der beleuchtbaren Anzeigefläche aus betrachtet, hinter der zweiten Reflexionsfläche ausgebildet ist. Die Anordnung der Reflexionsflächen sollte vorteilhafterweise so gewählt werden, dass die gesamte Anzeigefläche im Betätigungskopf homogen ausgeleuchtet wird. Dabei hat sich die oben beschriebene Anordnung als sehr vorteilhaft erwiesen.

In einer Fortführung dieses erfindungsgemäßen Konzepts kann es vorgesehen sein, dass der erste und der zweite Abschnitte der beleuchtbaren Anzeigefläche in einem Winkel von ca. 90° zueinander stehen. Die Schaltstellung ist dadurch auch gut von der Seite zu sehen und nicht nur von oben.

Der erfindungsgemäße Drehbetätiger weist einen zylindrischen Grundkörper und eine Betätigungshandhabe auf, die auf den zylindrischen Grundkörper aufgesetzt ist und eine beleuchtbare Anzeigefläche aufweist. Die beleuchtbare Anzeigefläche weist vorzugsweise zwei Abschnitte auf, welche in einem Winkel von vorzugsweise 90° zueinander angeordnet sind. Der erste Abschnitt ist dabei vorzugsweise an der Oberseite der Betätigungshandhabe angeordnet. Der zweite Abschnitt der beleuchtbaren Anzeigefläche ist an der Seitenfläche der Betätigungshandhabe in einem Winkel von ungefähr 90° zum ersten Abschnitt positioniert.

Die Betätigungshandhabe ist drehbar im zylindrischen Grundkörper des Drehbetätigers gelagert. Im zylindrischen Grundkörper des Drehbetätigers ist ein Einlegeboden positioniert, der durch Rasthaken in entsprechende Konturen der Innenfläche des zylindrischen Grundkörpers des Drehbetätigers greift und dadurch positionsstabil verbaut ist. Der Einlegeboden greift mit seinen Konturen in entsprechende Konturen einer Krone. Zwischen Einlegeboden und Betätigungshandhabe ist ein Lichtleiterführungsbauteil angeordnet, welches durch die vorzugsweise zylindrisch ausgebildete Krone geführt ist. Zwischen Krone und Lichtleiterführungsbauteil ist ein Federelement angeordnet, welches die Rückstellung der Betätigungshandhabe ermöglicht. Das Lichtleiterführungsbauteil ist an der Betätigungshandhabe fixiert und nimmt im Betätigungsfall die Krone mit, so dass die Krone inklusive des Lichtleiterführungsbauteils in eine um 45° zum Einlegeboden versetzte Position wechselt. In dieser Schaltstellung greifen die Konturen am Einlegeboden nicht mehr in die entsprechenden Konturen der Krone.

Das Lichtleiterführungsbauteil weist einen vorzugsweise zylindrisch ausgebildeten Lichtleiter auf, der vorzugsweise einstückig in einen quaderförmigen Teilabschnitt mündet. An der Oberseite des quaderförmigen Teilabschnitts ist ein Vorsprung positioniert, der sich auch an der Seitenfläche des quaderförmigen Teilabschnitts erstreckt und die beleuchtbare Anzeigefläche bildet. Im quaderförmigen Teilabschnitt sind vorzugsweise zwei ovale Ausnehmungen angeordnet, wobei die flächenmäßig größere Ausnehmung hinter der flächenmäßig kleineren Ausnehmung positioniert ist und von der beleuchtbaren Anzeigefläche weiter beabstandet ist als die kleinere Ausnehmung. Die Ausnehmungen weisen jeweils eine Seitenkante auf, die der beleuchtbaren Anzeigefläche am nächsten liegt. Diese Seitenkanten dienen als Reflexionsflächen und reflektieren einen Lichtstrahl, der von einer Lichtquelle ausgesandt über den Lichtleiter auf die Reflexionsflächen trifft und von dort auf die zwei Abschnitte der beleuchtbaren Anzeigefläche reflektiert wird. Die Reflexionsfläche der größeren Ausnehmung reflektiert dabei das Licht vorzugsweise auf den ersten Abschnitt der beleuchtbaren Anzeigefläche an der Oberseite, und die Reflexionsfläche der kleineren Ausnehmung reflektiert das Licht vorzugsweise auf den zweiten Abschnitt der beleuchtbaren Anzeigefläche an der Seitenfläche der Betätigungshandhabe. An der Unterseite es quaderförmigen Teilabschnitts sind Rasthaken angeordnet. Das Lichtleiterführungsbauteil ist vorzugsweise aus einem transparenten Kunststoff gefertigt, insbesondere aus Polycarbonat.

Der erfindungsgemäße Drehbetätiger mit einer homogenen Ausleuchtung der Anzeigefläche zeichnet sich durch ein Lichtleiterführungsbauteil aus, welches einstückig ausgebildet ist und durch entsprechend positionierte Reflexionsflächen im Lichtkanal die Anzeigefläche homogen ausleuchtet. Durch die Kopplung der Anzeigefläche an das Lichtleiterführungsbauteil ist diese homogene Ausleuchtung auch in den verschiedenen Schaltstellungen immer gewährleistet.

Weitere Vorteile und Ausführungen der Erfindung werden nachfolgend anhand eines Ausführungsbeispiels sowie anhand der Zeichnung erläutert.

Dabei zeigen schematisch:
Fig. 1 in einer Schnittdarstellung ein Ausführungsbeispiel eines erfindungsgemäßen Drehbetätigers mit einem Lichtleiterführungsbauteil;
Fig. 2 in einer Frontansicht das Lichtleiterführungsbauteil inklusive der an der Reflexionsfläche auftreffenden und reflektierten Lichtstrahlen;
Fig. 3 in einer perspektivischen Darstellung die Betätigungshandhabe mit beleuchtbarer Anzeigefläche.

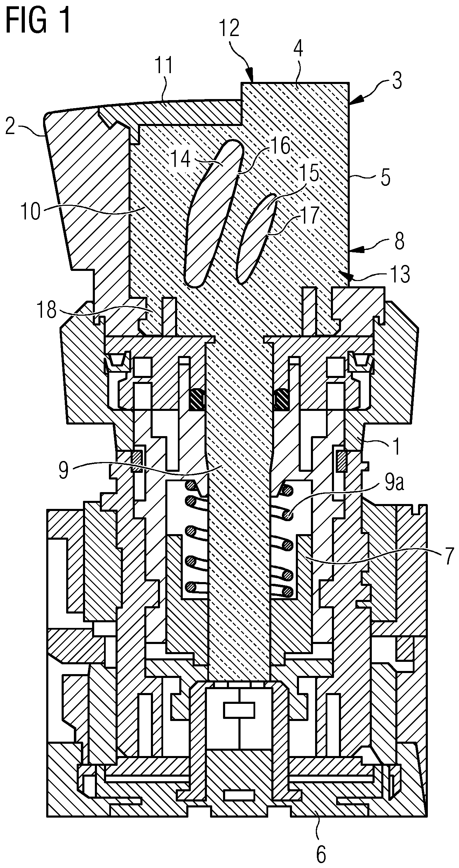

Fig. 1 zeigt einen erfindungsgemäßen Drehbetätiger mit einem zylindrischen Grundkörper 1 und einer Betätigungshandhabe 2, die auf den zylindrischen Grundkörper 1 aufgesetzt ist und eine beleuchtbare Anzeigefläche 3 aufweist. Die beleuchtbare Anzeigefläche 3 weist vorzugsweise zwei Abschnitte 4, 5 auf, welche in einem Winkel von vorzugsweise ca. 90° zueinander angeordnet sind. Der erste Abschnitt 4 ist dabei vorzugsweise an der Oberseite 11 der Betätigungshandhabe 2 angeordnet. Der zweite Abschnitt 5 der beleuchtbaren Anzeigefläche 3 ist an der Seitenfläche 13 der Betätigungshandhabe 2 in einem Winkel von ungefähr 90° zum ersten Abschnitt 4 positioniert.

Die Betätigungshandhabe 2 ist drehbar im zylindrischen Grundkörper 1 des Drehbetätigers gelagert. Im zylindrischen Grundkörper 1 des Drehbetätigers ist ein Einlegeboden 6 positioniert, der durch Rasthaken in entsprechende Konturen der Innenfläche des zylindrischen Grundkörpers 1 des Drehbetätigers greift und dadurch positionsstabil verbaut ist. Der Einlegeboden 6 greift mit seinen Konturen in entsprechende Konturen einer Krone 7. Zwischen Einlegeboden 6 und Betätigungshandhabe 2 ist ein Lichtleiterführungsbauteil 8 angeordnet, welches durch die vorzugsweise zylindrisch ausgebildete Krone 7 geführt ist. Zwischen Krone 7 und Lichtleiterführungsbauteil 8 ist ein Federelement 9a angeordnet, welches die Rückstellung der Betätigungshandhabe 2 ermöglicht. Das Lichtleiterführungsbauteil 8 ist an der Betätigungshandhabe 2 fixiert und nimmt im Betätigungsfall die Krone 7 mit, so dass die Krone 7 inklusive des Lichtleiterführungsbauteils 8 in eine um 45° zum Einlegeboden 4 versetzte Position wechselt. In dieser Schaltstellung greifen die Konturen am Einlegeboden 6 nicht mehr in die entsprechenden Konturen der Krone 7.

Das Lichtleiterführungsbauteil 8 weist einen vorzugsweise zylindrisch ausgebildeten Lichtleiter 9 auf, der vorzugsweise einstückig in einen quaderförmigen Teilabschnitt 10 mündet. An der Oberseite 11 des quaderförmigen Teilabschnitts 10 ist ein Vorsprung 12 positioniert, der sich auch an der Seitenfläche 13 des quaderförmigen Teilabschnitts 10 erstreckt und die beleuchtbare Anzeigefläche 3 bildet. Im quaderförmigen Teilabschnitt 10 sind vorzugsweise zwei ovale Ausnehmungen 14, 15 angeordnet, wobei die flächenmäßig größere Ausnehmung 14 hinter der Ausnehmung 15 positioniert ist und damit von der beleuchtbaren Anzeigefläche 3 weiter beabstandet ist als die Ausnehmung 15. Die Ausnehmungen 14, 15 weisen jeweils eine Seitenkante auf, die der beleuchtbaren Anzeigefläche 3 am nächsten liegt. Diese Seitenkanten dienen als Reflexionsflächen 16, 17 und reflektieren einen Lichtstrahl, der von einer Lichtquelle ausgesandt über den Lichtleiter 9 auf die Reflexionsflächen 16, 17 trifft und von dort auf die zwei Abschnitte 4, 5 der beleuchtbaren Anzeigefläche 3 reflektiert wird. Die Reflexionsfläche 16 der Ausnehmung 14 reflektiert dabei das Licht vorzugsweise auf den ersten Abschnitt 4 der beleuchtbaren Anzeigefläche 3 an der Oberseite 11, und die Reflexionsfläche 17 der Ausnehmung 15 reflektiert das Licht vorzugsweise auf den zweiten Abschnitt 5 der beleuchtbaren Anzeigefläche 3 an der Seitenfläche 13 der Betätigungshandhabe 2. An der Unterseite es quaderförmigen Teilabschnitts 10 sind Rasthaken 18 angeordnet. Das Lichtleiterführungsbauteil 8 ist vorzugsweise aus einem transparenten Kunststoff gefertigt, insbesondere aus Polycarbonat.

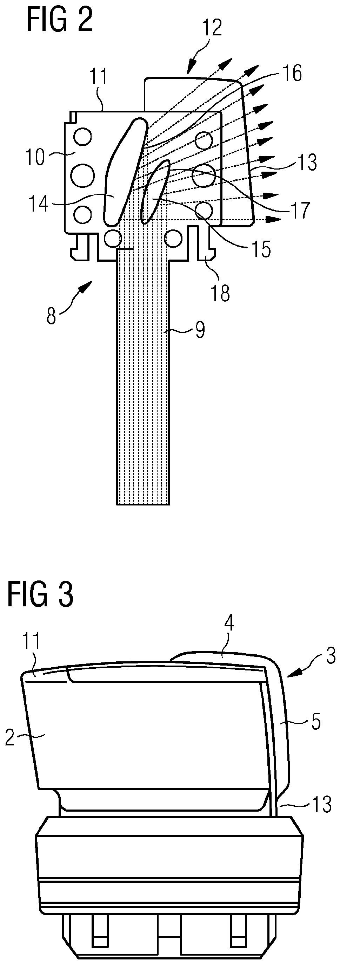

In Fig. 2 ist das Lichtleiterführungsbauteil 8 inklusive der an der Reflexionsfläche 16, 17 auftreffenden und reflektierten Lichtstrahlen dargestellt. Aus der Darstellung geht hervor, dass die Reflexionsflächen 16, 17 die unterschiedlichen Abschnitte 4, 5 der beleuchtbaren Anzeigefläche 3 ausleuchten. Die Reflexionsfläche 16 der Ausnehmung 14 reflektiert das Licht vorzugsweise auf den ersten Abschnitt 4 der beleuchtbaren Anzeigefläche 3 an der Oberseite, und die Reflexionsfläche 17 der Ausnehmung 15 reflektiert das Licht vorzugsweise auf den zweiten Abschnitt 5 der beleuchtbaren Anzeigefläche 3 an der Seitenfläche der Betätigungshandhabe 2. Dadurch entsteht eine homogen ausgeleuchtete Anzeigefläche 3.

Fig. 3 zeigt die Betätigungshandhabe 2 mit beleuchtbarer Anzeigefläche 3. Aus Fig. 3 gehen die zwei Abschnitte 4, 5 der beleuchtbaren Anzeigefläche 3 hervor, welche in einem Winkel von vorzugsweise ca. 90° zueinander angeordnet sind. Der erste Abschnitt 4 ist dabei vorzugsweise an der Oberseite 11 der Betätigungshandhabe 2 angeordnet. Der zweite Abschnitt 5 der beleuchtbaren Anzeigefläche 3 ist an der Seitenfläche 13 der Betätigungshandhabe 2 in einem Winkel von ungefähr 90° zum ersten Abschnitt positioniert.

Der erfindungsgemäße Drehbetätiger mit einer homogen ausgeleuchteten Anzeigefläche zeichnet sich durch ein Lichtleiterführungsbauteil aus, welches einstückig ausgebildet ist und durch entsprechend positionierte Reflexionsflächen im Lichtkanal die Anzeigefläche homogen ausleuchtet. Durch die Kopplung der Anzeigefläche an das Lichtleiterführungsbauteil ist diese homogene Ausleuchtung auch in den verschiedenen Schaltstellungen immer gewährleistet.

### Bezugszeichenliste

- 1: Grundkörper
- 2: Betätigungshandhabe
- 3: Anzeigefläche
- 4: Abschnitt
- 5: Abschnitt
- 6: Einlegeboden
- 7: Krone
- 8: Lichtleiterführungsbauteil
- 9: Lichtleiter
- 9a: Federelement
- 10: Quaderförmiger Teilabschnitt
- 11: Oberseite
- 12: Vorsprung
- 13: Seitenfläche
- 14: Ausnehmung
- 15: Ausnehmung
- 16: Reflexionsfläche
- 17: Reflexionsfläche
- 18: Rasthaken

## Patentansprüche

1. Drehbetätiger mit einem zylindrischen Grundkörper (1) und einer Betätigungshandhabe (2), die auf den zylindrischen Grundkörper (1) aufgesetzt ist und eine beleuchtbare Anzeigefläche (3) aufweist, wobei im zylindrischen Grundkörper (1) eine Lichtquelle angeordnet ist, deren Licht über eine erste Reflexionsfläche (16) auf einen ersten Abschnitt (4) der beleuchtbaren Anzeigefläche (3) reflektiert wird, **dadurch gekennzeichnet, dass** das Licht der Lichtquelle über eine zweite Reflexionsfläche (17) auf einen zweiten Abschnitt (5) der beleuchtbaren Anzeigefläche (3) reflektiert wird, und dass das Licht der Lichtquelle über einen Lichtleiter (9) zur beleuchtbaren Anzeigefläche (3) geführt ist, wobei der Lichtleiter (9), die erste und zweite Reflexionsfläche (16, 17) und die beleuchtbare Anzeigefläche (3) in einem Lichtleiterführungsbauteil (8) ausgebildet sind und wobei die zweite Reflexionsfläche (17) als ovale Ausnehmung ausgebildet ist.

2. Drehbetätiger nach Anspruch 1, **dadurch gekennzeichnet, dass** das Lichtleiterführungsbauteil (8) als transparentes Kunststoffteil ausgebildet ist.

3. Drehbetätiger nach einem der Ansprüche 1 bis 2, **dadurch gekennzeichnet, dass** das Lichtleiterführungsbauteil (8) von unten in eine Betätigungshandgabe (2) des Drehbetätigers einzuführen ist.

4. Drehbetätiger nach einem der Ansprüche 1 bis 3, **dadurch gekennzeichnet, dass** die erste Reflexionsfläche (16) als ovale Ausnehmung ausgebildet ist.

5. Drehbetätiger nach einem der Ansprüche 1 bis 4, **dadurch gekennzeichnet, dass** die erste Reflexionsfläche (16), von der beleuchtbaren Anzeigefläche (3) aus betrachtet, hinter der zweiten Reflexionsfläche (17) ausgebildet ist.

6. Drehbetätiger nach einem der Ansprüche 1 bis 5, **dadurch gekennzeichnet, dass** der erste und der zweite Abschnitte (4, 5) der beleuchtbaren Anzeigefläche (3) in einem Winkel von ca. 90° zueinander stehen.

## Claims

1. Rotary actuator comprising a cylindrical main body (1) and an actuating handle (2) which is placed on the cylindrical main body (1) and has a display area (3) which can be illuminated, wherein a light source is arranged in the cylindrical main body (1), the light from said light source being reflected by means of a first reflection surface (16) onto a first section (4) of the display area (3) which can be illuminated, **characterized in that** the light from the light source is reflected by means of a second reflection surface (17) onto a second section (5) of the display area (3) which can be illuminated, and **in that** the light from the light source is guided by means of a light guide (9) to the display area (3) which can be illuminated, wherein the light guide (9), the first and the second reflection surface (16, 17) and the display area (3) which can be illuminated are formed in a light guide guiding component (8) and wherein the second reflection surface (17) is in the form of an oval recess.

2. Rotary actuator according to Claim 1, **characterized in that** the light guide guiding component (8) is in the form of a transparent plastic part.

3. Rotary actuator according to one of Claims 1 to 2, **characterized in that** the light guide guiding component (8) is intended to be inserted into an actuating handle (2) of the rotary actuator from below.

4. Rotary actuator according to one of Claims 1 to 3, **characterized in that** the first reflection surface (16) is in the form of an oval recess.

5. Rotary actuator according to one of Claims 1 to 4, **characterized in that** the first reflection surface (16) is formed behind the second reflection surface (17), as viewed from the display area (3) which can be illuminated.

6. Rotary actuator according to one of Claims 1 to 5, **characterized in that** the first and second sections (4, 5) of the display area (3) which can be illuminated are at an angle of approximately 90° in relation to one another.

## Revendications

1. Actionneur rotatif avec un corps de base cylindrique (1) et une manette d'actionnement (2) placée sur le corps de base cylindrique (1) et une surface d'affichage pouvant être éclairée (3), dans lequel une source lumineuse est disposée dans le corps de base cylindrique (1), dont la lumière est réfléchie via une première surface de réflexion (16) sur une première section (4) de la surface d'affichage pouvant être éclairée (3), **caractérisé en ce que** la lumière de la source lumineuse est réfléchie via une deuxième surface de réflexion (17) sur une deuxième section (5) de la surface d'affichage pouvant être éclairée (3), et **en ce que** la lumière de la source de lumière est menée via un conduit de lumière (9) vers la surface d'éclairage pouvant être éclairée (3), dans lequel le conduit de lumière (9), la première et la deuxième surface de réflexion (16, 17) et la surface d'affichage pouvant être éclairée (3) sont exécutés dans un composant de guidage de conduit de lumière (8) et dans lequel la deuxième surface de réflexion (17) est exécutée sous la forme d'un évidement ovale.

2. Actionneur rotatif selon la revendication 1, **caractérisé en ce que** le composant de guidage de conduit de lumière (8) est exécuté sous la forme d'une pièce de plastique transparente.

3. Actionneur rotatif selon l'une des revendications 1 à 2, **caractérisé en ce que** le composant de guidage de conduit de lumière (8) est à introduire par le bas dans une manette d'actionnement (2) de l'actionneur rotatif.

4. Actionneur rotatif selon l'une des revendications 1 à 3, **caractérisé en ce que** la première surface de réflexion (16) est exécutée sous la forme d'un évidement ovale.

5. Actionneur rotatif selon l'une des revendications 1 à 4, **caractérisé en ce que** la première surface de réflexion (16) est, vu au départ de la surface d'affichage pouvant être éclairée (3), exécutée derrière la deuxième surface de réflexion (17).

6. Actionneur rotatif selon l'une des revendications 1 à 5, **caractérisé en ce que** la première et la deuxième section (4, 5) de la surface pouvant être éclairée (3) décrivent un angle d'environ 90° l'une par rapport à l'autre.
